(19) Europäisches Patentamt
European Patent Office
Office européen des brevets

(11) **EP 1 835 308 A1**

(12) **EUROPEAN PATENT APPLICATION**

(43) Date of publication:
**19.09.2007 Bulletin 2007/38**

(51) Int Cl.:
***G01V 1/00*** *(2006.01)*

(21) Application number: **06111246.2**

(22) Date of filing: **16.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **SmartTrig AB**
**234 35 Lomma (SE)**

(72) Inventor: **FRISK, Fredrik**
**241 93, Eslöv (SE)**

(74) Representative: **Akerman, Marten Lennart et al**
**Albihns Malmö AB**
**Box 4289**
**203 14 Malmö (SE)**

(54) **Detection unit and a method of using the same**

(57)    The invention relates to a detection unit, a system of a plurality of detection units and a method using a plurality of detection units. The detection unit comprises a sensor, a control unit, a radio unit wherein the control unit is able to process parameters received from said at least one sensor and from said other detection units in order to calculate a direction of a detected object. In addition, the invention discloses a detection system that comprises a plurality of detection units (1,2,3) adapted to wirelessly synchronize with one another wherein each detection unit includes at least one sensor, a control unit and a radio unit. The detection units (1,2,3) are able to transmit and receive information transferred from said at least one sensor of said detection units between said detection units in order to compute a direction of a detected object.

**FIG 7**

**EP 1 835 308 A1**

**Description**

Field of the invention

The present invention relates to detection units and methods adapted for detecting objects, especially detection units adapted to determine direction and location of the detected object.

Background of the invention

Today, in the area of detecting objects it is very common to use any type of sensors. Different types of sensors using different types of detection techniques are known and are in general based on seismic detection and audio detection. Typical detection system rapport back to a central station, in which a decision is taken based on the information received from the sensor. In some areas, such as in the military etc, it is important to define what sort of object, a person, an animal or different types of vehicles, that has been detected in order to make the right decisions. Document DE-C1-19542871 discloses a system wherein the detection of pedestrians is detected and confirmed based on certain parameters. The detection is based on a geophone as well as a microphone. Document US-A-5 054 006 discloses a detection system for indicating the presence of motorized equipment in a designated area having an acoustic sensor, a seismic sensor and an acoustic signal transmitter. The acoustic sensor output is passed to the transmitter only during coincidence of seismic and acoustic detection. Document US-A-3 573 817 discloses an electronic monitoring system wherein a monitoring unit has a plurality of sensors that is each sensitive to a different phenomenon such as audio, seismic, magnetic or proximity, i.e. capacitance changes. The system only outputs a signal if a combination of two or more sensors produce outputs. The system can detect what type of object that is detected. Document US-A-5 969 608 discloses a system for detecting object by a plurality of buried sensors. Document US-A-4 604 738 discloses a method of classifying detected vehicle as heavy or light.

All the mentioned techniques use the audio signals as well as the seismic signals but none of the prior art document discloses the feature of using the sensors to detect the direction or location of the object.

A general object of the present invention is to meet the market demand of a flexible system for sensors for detecting objects in an area.

An aspect of this object is to provide a sensor that is cheap and easy to manufacture.

Another aspect of this object is to provide a sensor that is able to detect type of object in an area.

A further aspect of the object is to provide a sensor that sends a minimum of information over the air, in order to stay undetected.

Another aspect of this object is to provide a sensor that may be used in order to detect direction of a detected object. This is of importance when the monitored area of interest is only a part of the possible monitored area, e.g. vehicles on a certain road.

Another aspect of this object is to be able to detect location of the detected object.

A further aspect of this object is to provide a sensor that is small and not fragile.

Summary of the invention

The present invention relates to a detection unit, a system of a plurality of detection units and a method using a plurality of detection units as defined in the independent claims 1, 14, 23 and 28. The present invention relates to a detection unit comprising a sensor, a control unit, a radio unit wherein the control unit is able to process parameters received from said at least one sensor and from said other detection units in order to calculate a direction of a detected object.

In addition, the present invention discloses a detection system that comprises a plurality of detection units adapted to wirelessly synchronize with one another wherein each detection unit includes at least one sensor, a control unit and a radio unit. The detection units are able to transmit and receive information transferred from said at least one sensor of said detection units between said detection units in order to compute a direction of a detected object.

The present invention further discloses a method for detecting objects in a predetermined area using a plurality of detection units comprising; synchronizing said plurality of detection units using a synchronizing protocol; sensing signals received from an object in said area in each detection unit of the plurality of detection units; processing and evaluating the received signals based on said synchronization; and determining direction of said source based on the processing and evaluating.

Additionally, the present invention relates to a method of locating a detected object, computing the location based on directions received from at least two systems of detection units.

Thereby, the invention provides a method for locating a source with a small, easy handled, cheap and reliable detection unit.

Brief description of the drawings

The invention will be described in more detail below with the reference to examples of embodiments and with reference to the attached drawing, on which

Fig. 1 schematically illustrates a detection device in accordance with an embodiment of the present invention,

Fig. 2 schematically illustrates the transfer of signals according to an embodiment of the present invention,

Fig. 3 illustrates an embodiment of an array of detection units,

Fig. 4 illustrates the definition of the length of the array,

Fig. 5 schematically illustrates different embodiments of the array of detection units,

Fig. 6 schematically illustrates an embodiment of the calibration of an array of detection units;

Fig. 7 illustrates schematically the function of an embodiment of the array of detection units; and

Fig. 8 schematically illustrates a triangulation using arrays of detection units.

Detailed description of preferred embodiments

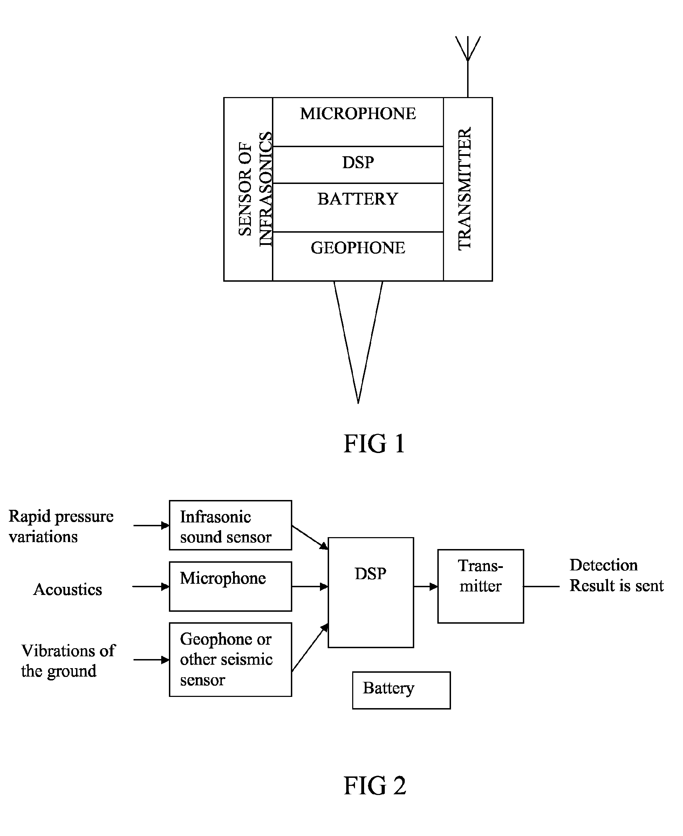

The present invention provides an array of detection units, detection units, that is used as a tracking array that tracks sources that moves inside and outside a monitored area as well as tracking sources at a specific direction. Referring to fig. 1, one embodiment of a detection unit of the present invention is disclosed comprising a geophone connected to a ground nail to detect seismic activity. It should be understood that any type of seismic sensor may be used, a microphone in order to detect acoustic signals and a sensor of infrasonic signals that detect rapid pressure variations in the monitored area. Structures that produce infrasound are structures, such as engines, cars, buses, trains, motorcycles, and airplanes. The sensors are all integrated internally in a housing of the detection unit. The detecting unit further comprises a digital signal processor, DSP, or some other equivalent hardware for example an FPGA (field programmable gate array) that processes the output from the different sensors and decides whether to transmit a signal via a transmitter to a receiver. The different elements are all power supplied by a battery.

It should be understood that the sensor may only include one of the sensors if the other sensors are redundant. However, in order to receive as much information as possible concerning detected objects the illustrated embodiment of the invention includes all three types of sensors.

From fig. 2, the signal processing of the embodiment in fig. 1 is shown in a block diagram. The signals or waves from a detected object are received by the detecting unit; vibrations in the ground are detected by the geophone, audio is detected by the microphone and rapid pressure variations are detected by the infrasonic sound sensor. The input signals are converted to digital signals through regular A/D converters. The output of the sensors are received in the digital signal processor, DSP, and evaluated in said DSP to determine type of object. Based on settings in the DSP, the DSP decides whether to send a detection result. The settings may be vehicle detection, person detection, vehicle and person detection or the like. The result is sent using a transmitter. By processing information from the seismic sensor, the acoustic sensor and the infrasonic sensor one can with great reliability establish if a person or a vehicle is detected by the detecting unit and by only transmitting the result of the DPS, e.g. person or vehicle the transmitted information can be kept down to a minimum. Thereby, the communication from the detecting unit is harder to detect and hence harder to jam. If the different elements of the detecting unit have low power consumption, the detecting unit can be run by a standard AA battery.

An object entering an area of interest, e.g. for a stakeout operation, radiates a number of waves travelling through ground, air or water. These waves may be sound waves, seismic waves through the ground or infrasonic waves, sounds with frequencies below 20 Hz and, therefore, beyond the range of human hearing. By using these three types of waves the sources of information is enlarged and the information concerning detected objects is very comprehensive and solid resulting in a detection unit that has a long range as well as being very accurate in determining what type of object that produces the waves.

Referring back to fig. 1, the detecting unit may be as shown in the fig 1 a modular unit, wherein the seismic sensor is connected to a ground nail and the ground nail is mechanically isolated from the casing of the detecting unit. The microphone may be placed in the upper portion of the detecting unit and is preferably protected from wind and rain. Also the microphone is mechanically isolated from the casing. The infrasonic sensor may be placed in the detecting unit in a circumferential portion in order to receive pressure variations. The infrasonic sensor is mechanically isolated from the casing and is not influenced by the ground nail. Mechanically isolating the sensors from the casing and thereby isolating each sensor from one another provide more reliable results. The battery is of course exchangeable.

In one embodiment of the present invention, the detecting unit comprises an interface, e.g. a man machine interface, wherein a selecting arrangement, such as a turnable switch, stepwise switch or the like, is provided to be able to set the operation mode of the detecting unit, e.g. what to detect; persons, vehicles, persons + vehicles or off.

A light emitting diode, LED, may be included in the detecting unit indicating if the detecting unit is on or off. The diode may further indicate when a built in test is running, BIT. During a BIT the different elements are tested and during this process the LED indicates a positive test by a green colour. If a process or element fails the LED turns red. In order to stay unnoticed the LED may, by itself, turn off after a successful BIT. The LED may also indicate when communication between the transmitter and a receiver is established.

The data is sent by the transmitter by using any standard technique such as WLAN, Bluetooth, WiMAX, Zigbee, GPRS, 3G or the like.

In a different embodiment a transceiver is used instead of the transmitter in order to be able to receive data from a central unit or the like.

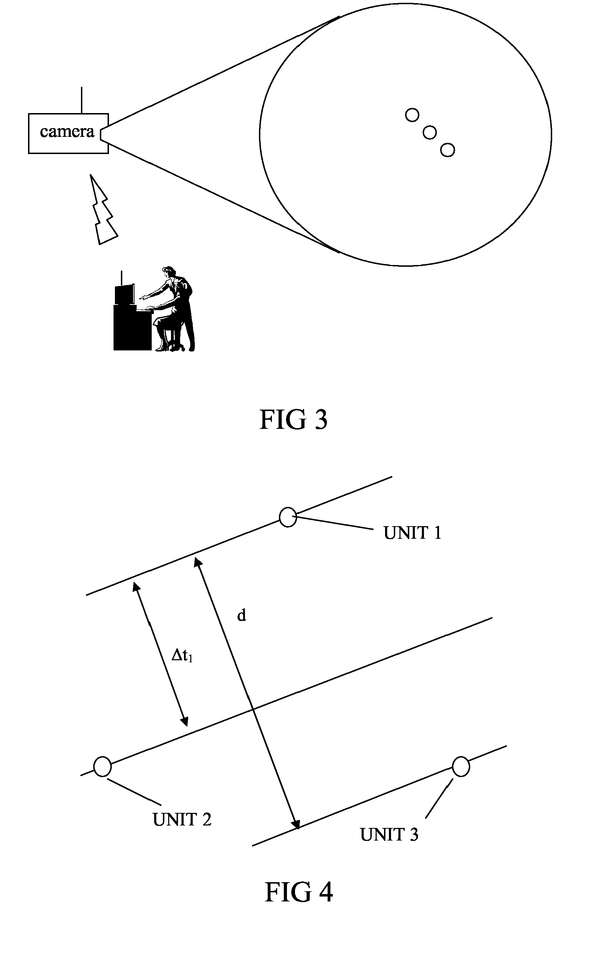

The detecting unit functions as follows. A plurality of detection units is employed at a certain area. The area is for some reason monitored in order to detect e.g. vehicles. When a vehicle enters the area the sensors, especially the infrasonic and the seismic sensor, register signals in the air and in the ground. These signals received by the sensors are converted and transferred to the digital signal processor. In the DSP the signals are evaluated and processed in order to establish if there is a vehicle in the area. When the DSP has established that the signals are from a vehicle a detection result is transferred to the transmitter. The transmitter then sends the detection result further to a central unit. In an embodiment shown in fig. 3, the detection result is transmitted to a camera that triggers the camera to take a photo. The photo is then sent to a central unit. In the embodiment of fig. 3, the area of interest is the area that is monitored by the camera; such an area may be a bridge, tunnel, door or the like. To keep the amount of signalling down from the sensors the sensors are set to only send a confirmed detected object when the direction of the object is within the area of interest.

Referring to fig. 4, the detection units are set up as a wireless array of detection units for monitoring e.g. seismic, infrasonic and acoustic activities (sources). The array of detection units can be used to give information of the direction, location of an e.g. acoustic, seismic or infrasonic source. The array of detection units can also be used as a target separator, i.e. used to spatially separate several sources. An array of detection units with three detection units is disclosed in fig. 4. All detection units in the array of detection units communicate with each other. In one embodiment, one detection unit should be the master unit that determines the world clock of the array of detection units. This is also useful when the direction of the object is determined. A detection unit may be adapted to work as a master as well as a slave, in dependence of how the roles are taken. In one embodiment of the invention the detection unit that first senses a propagating wave takes the role of a master and in alternate embodiment the role of a master is set manually by e.g. turning on the unit first that is to be the master. The first detection unit that senses a propagating wave or the master requests data from the other detection unit in order to receive information from the other detection units to calculate the direction of the object detected.

By connecting the array of detecting units wirelessly the array of detecting units will be more flexible for detecting seismic and infrasonic activities. The seismic propagation velocity could vary at least one order of magnitude depending on location and direction. Thus the size of the array of detection units should be calibrated for each and every location where it is supposed to be set up, and intended target to detect. The size of the array could be as large as one hundred meters making an array of detection units with wires very impractical. On another location the array could just be a meter wide.

The velocity for a seismic wave varies depending on the ground conditions, e.g. the velocity may vary from 100 m/s to 3000 m/s. To be able to determine the direction of a source the time-of-arrival (TOA) of a front of a wave that is passing (figure 4) needs to be calculated. TOA has to be calculated for all the detection units in the array of detection units. By doing this TOA calculation for all detection units in the array of detection units the direction of arrival (DOA) can be calculated. The dimension of the array must be less than half the wavelength of the wave that passes. Depending on which frequencies and the propagation velocity of the medium the size of the array of detection units has to be adjusted accordingly.

The wavelength of a propagating wave is given by:

$$\lambda = v/f$$

where $\lambda$ is the wavelength, $v$ is the propagation velocity of a wave and $f$ is the frequency. For example, if we are looking into seismic propagation of a wave the frequencies of interest is in the interval 5 - 500 Hz.

| Frequency | Propagation velocity | Wavelength |
|-----------|---------------------|------------|
| 5 - 500 Hz | 100 m/s | 0.2 - 20 m |
| 5 - 500 Hz | 1000 m/s | 2- 200 m |
| 5 - 500 Hz | 3000 m/s | 6- 600 m |

As seen in the table above the wavelength of a passing front of a wave could vary from 0.2 m to 600 m depending on the propagation velocity and the frequency of interest. Thus the size of the array of detection units must be changeable to make it possible to calculate DOA. From the table above the array of detection units is set to a length d between 0.1 to 300 m, due to fact that the dimension of the array must be less than half the wavelength of the wave. Referring to fig. 4, an array of detection units comprising three detection units is shown. The front of the wave is indicated as straight lines at different times. If the wave is originating from above the detection units in the figure 4, detection unit 1 is the first detection unit to detect the front of the wave. Detection unit 2 detects the front of the wave $\Delta t_1$ seconds later. Detection unit 3 detects the front of the wave $\Delta t_2$ seconds later. The propagation velocity is $v$. The length of the array is d= $v$ $\Delta t_2$. The length d of the array is the largest distance between two detection units one can find in a given array of detection units. The length must be smaller than half the wavelength of the wave i.e. less than 0.1-300 m in the example stated above.

To be able to calculate the direction of a signal with a given precision several data acquisition channels must be simultaneously sampled to calculate the (TOA) time-of-arrival for each detection unit and compare them.

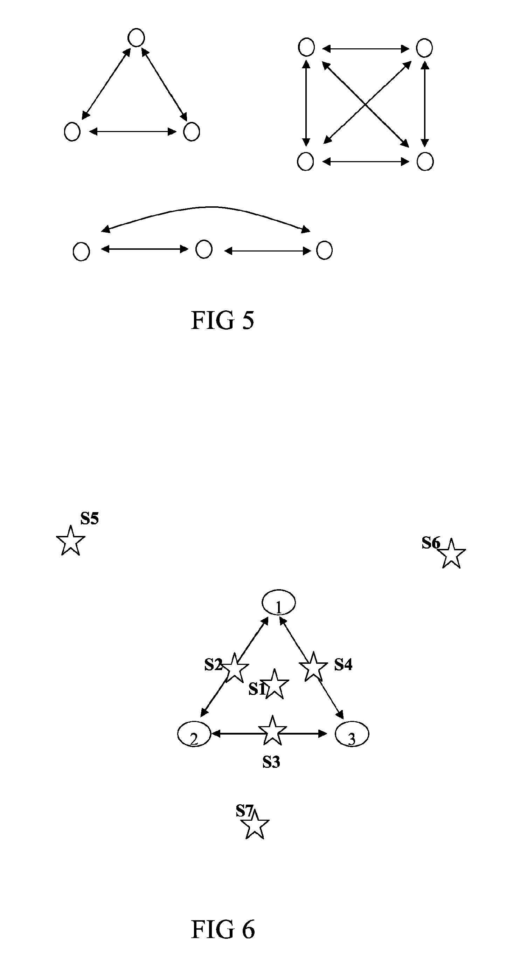

The DOA error only depends on the frequency of sampling, if the topology of the array of detection units is given. Figure 5 shows some different topologies of arrays of detection units. The present invention works for all detection unit configurations. The topology of the array of detection units or the number of detection units does not matter but should not be less than three in order to get an accurate direction. The only restriction is that all detection units must have direct communication with each other. Multihop communication does not work because of the increased time delay.

Time synchronization is particularly important in a Wireless Sensor Network (WSN) as a means to correlate diverse measurements from a set of distributed sensor elements and synchronize clocks for shared channel communication protocols. To be able to synchronize the data acquisition on the different sensors the wireless sensor network needs to be synchronized. This can be done for example, using the Flooding Time Synchronization Protocol (FTSP). Wireless sensors are typically designed with very stringent constraints for size, cost, and especially power consumption. The Flooding Time Synchronization Protocol (FTSP) was developed explicitly for time synchronization of mesh-connected wireless sensor networks. However, ZigBee can also accommodate master-slave networks that can be more power-efficient. The synchronization can be established with a precision of 61 $\mu$s of a world clock, when using a sampling frequency of about 16 000 Hz which may be used in the DOA calculations. The precision of the FTSP is enough to be employed in the system of the present invention.

Referring to fig 6, the calibration procedure of an array of detection units is disclosed. By the calibration the propagation velocity of the front of the wave can be calculated. The calibration procedure can also be used to check the world clock of the array of detection units. An embodiment of a calibration is disclosed in Fig 6 and is described as follows.

Step S1; create an impulse, illustrated by a star, at the centre of the array with the same distance to all sensors. The front of the wave should arrive at the same time to all the sensors if

- The propagation velocity is the same in all directions in the medium
- The world clock is synchronized, i.e. the sensors internal clocks are synchronized;

step S2; create an impulse in between sensor 1 and 2, with the same distance to both sensors. From the time delay for the front of the wave to arrive to sensor 3 the propagation velocity can be calculated; step S3; create an impulse in between sensor 2 and 3, with the same distance to both sensors. From the time delay for the front of the wave to arrive to sensor 1 the propagation velocity can be calculated; step S4; create an impulse in between sensor 3 and 1, with the same distance to both sensors. From the time delay for the front of the wave to arrive to sensor 2 the propagation velocity can be calculated, and last steps S5-S7; create 3 impulses outside the array of detection units at a distance large compared to the size of the array. When these impulses is done check the previous results from step s1 to s4.

The above stated procedure determines the propagation velocity in the medium that is studied and also gives information if the propagation velocity depends on the direction of the impulse inside the array of detection units.

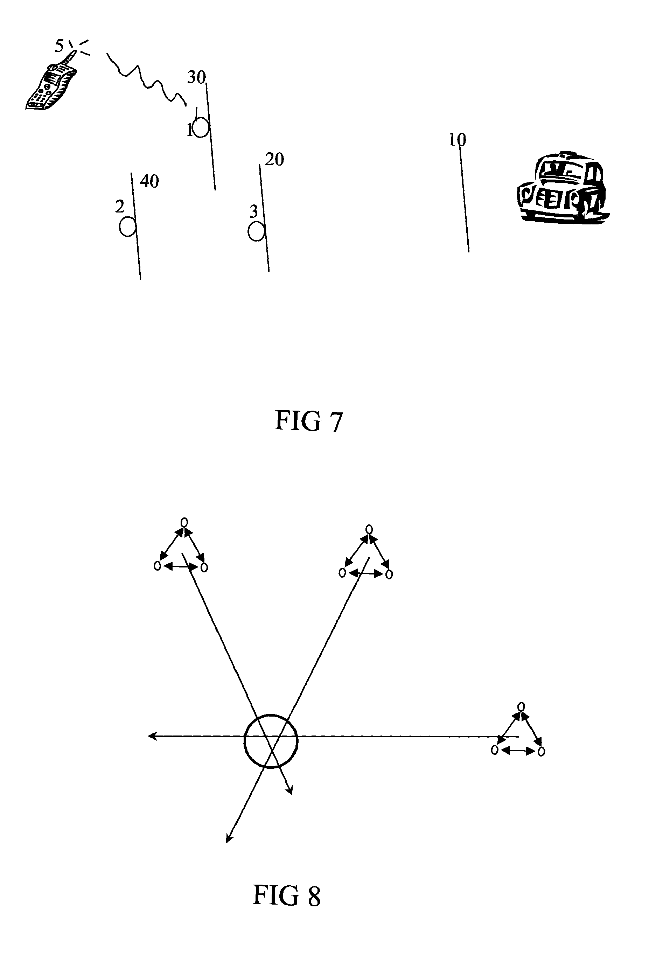

Through the synchronization and calibration of the array of detection units a wireless array of detection units is provided that can determine the direction of a vehicle or person entering an area as follows. Referring to fig. 7, an object entering an area of interest, e.g. for a stakeout operation, radiates a number of waves travelling through ground, air or water, indicated at point 10. These waves may be sound waves, seismic waves through the ground or infrasonic waves and are travelling towards the array of detection units. Sensor 3 is first hit by the waves, indicated at point 20, followed by the sensor 1, indicated at point 30, and last the sensor 2 is hit by the waves indicated at point 40. Using the synchronization and calibration previously made in order to determine the propagation velocity in the medium and also if the propagation velocity depends on the direction of the impulse inside the array of detection units, the master unit, e.g. sensor 1, of the array calculates the direction of the object causing the waves. This direction being in the area of interest of the stakeout operation leads the master unit of the array to transmit an indication that an object, being a vehicle, is now entering the area of interest to a central unit 5.

The array of detection units can also be used as a beamformer, i.e. separating multiple sources at different locations at the same time from each other in order to track several sources. It should be understood that the array of detection units may distinguish different types of objects as well as in different directions.

Referring to fig. 8, a plurality of arrays of detection units is used to determine, by triangulation, the distance and position of a source due to the fact that each array of detection units can determine the direction of the source. By letting the master unit of an array of detection units receive all information from the slave units; the master unit can calculate the direction of the object and send the result to a central unit. It should be understood that a unit in an array of detection units may be a master unit of a plurality of arrays of detection units, herein called major master unit. In this case the direction result of each array controlled by the major master unit is received at the major master unit. The major master unit then calculates the location of the source or object and determines if the location result should be transmitted to a central unit or not. When triangulating a position based on a plurality of wireless sensor arrays the arrays need to be synchronized. It should though be understood that the precision of this synchronization does not have to be as precise as the internal synchronization of an array as described above.

The present invention provides an array of detection units whose size is very easy to change. It is very practical and flexible and can be deployed easily and fast in different locations. The size of the array is selected on the basis of the propagation velocity and what kind of source the array should track or detect. The array of detection units may be used as a tracking array that tracks sources that moves inside and outside a monitored area as well as tracking sources at a specific direction.

The foregoing has described the principles, preferred embodiments and modes of operation of the present invention. However, the invention should be regarded as illustrative rather than restrictive, and not as being limited to the particular embodiments discussed above. It should therefore be appreciated that variations may be made in those embodiments by those skilled in the art without departing from the scope of the present invention as defined by the following claims.

**Claims**

1. A detection unit for detection of an object and adapted to be wirelessly synchronized with other detection units comprising at least one sensor, a control unit and a radio unit, **characterized in that** the control unit is able to process parameters received from said at least one sensor of at least one detected object and parameters received from said other detection units of said at least one detected object in order to calculate a direction of the at least one detected object.

2. A detection unit according to claim 1, **characterized in that** one sensor is an acoustic sensor adapted to sense acoustic signals.

3. A detection unit according to claim 1 or 2, **characterized in that** one sensor is a sensor adapted to sense infrasonic signals.

4. A detection unit according to claim 1, **characterized in that** one sensor is a seismic sensor adapted to sense seismic signals.

5. A detection unit according to claim 2 and 3 and 4, **characterized in that** the detection unit comprises at least two of said sensors.

6. A detection unit according to claim 1, **characterized in that** the detection unit comprises a sensor that is adapted to sense infrasonic signals, an acoustic sensor that is adapted to sense acoustic signals being other than infrasonic sound and a sensor adapted to sense seismic signals.

7. A detection unit according to any of claims 5 or 6, **characterized in that** said sensors are integrated in a casing of said detection unit.

8. A detection unit according to claim 7, **characterized in that** the sensors are mechanically isolated from each other and said casing.

9. A detection unit according to any of previously claims, **characterized in that** the detection unit is adapted to be capable of operating as a master unit, receiving and transmitting information via the radio unit.

10. A detection unit according to any of previously claims, **characterized in that** the detection unit is adapted to be capable of operating as a slave unit, receiving and transmitting information via the radio unit.

11. A detection unit according to any of claims 1-10, **characterized in that** the control unit, based on sensed signals received from said at least one sensor, is adapted to determine whether to transmit data or not via the radio unit.

12. A detection unit according to any of previously claims, **characterized in that** the detection unit is adapted to be calibrated with other detection units.

13. A detection unit according to any of previously claims, **characterized in that** the detection unit further comprises a man machine interface wherein a selector switch is provided in order to select type of sources that is to be detected.

14. A detection system that comprises a plurality of detection units adapted to wirelessly synchronize with one another wherein each detection unit includes at least one sensor, a control unit and a radio unit, **characterized in that** the detection units are able to transmit and receive information transferred from said at least one sensor of said detection units between said detection units in order to compute a direction of a detected object.

15. A detection system according to claim 14, **characterized in that** the at least one sensor is an acoustic sensor adapted to sense acoustic signals.

16. A detection system according to claim 14, **characterized in that** the at least one sensor is a sensor adapted to sense infrasonic signals.

17. A detection system according to claim 14, **charac-**

**terized in that** the at least one sensor is a seismic sensor that senses seismic signals.

18. A detection system according to claims 15-17, **characterized in that** the detection units of said system comprises at least two of said sensors.

19. A detection system according to claims 14, **characterized in that** the detection unit comprises a sensor that is adapted to sense infrasonic signals, an acoustic sensor that is adapted to sense acoustic signals being other than infrasonic sound and a sensor adapted to sense seismic signals.

20. A detection system according to any of previously claims 14-19, **characterized in that** at least one of the detection units of the plurality of detection units is adapted to be capable of operating as a master unit, receiving and transmitting information.

21. A detection system according to any of previously claims 14-20, **characterized in that** each detection unit of the plurality of detection units is adapted to be capable of operating as a slave unit, receiving and transmitting information.

22. A detection system according to any of previously claims 14-21, **characterized in that** each detection unit is adapted to be calibrated with the other detection units.

23. A method for detecting an object in a predetermined area using a plurality of wireless detection units comprising:

   a. i) synchronizing said plurality of detection units using a synchronizing protocol;
   b. sensing signals received from an object in said area in each detection unit of the plurality of detection units;
   c. processing and evaluating the received signals from each of the detection units based on said synchronization; and
   d. determining a direction result of the detected object based on the processing and evaluating.

24. A method for detecting an object according to claim 23 **characterized in that** the a. synchronization further comprises;

   a. ii) calibrating said plurality of detection units to determine the propagation velocity of a signal travelling between the detection units.

25. A method for detecting an object according to claim 23 or 24 **characterized in that** the b. sensing further comprises; sensing signals wherein the signals are acoustic signals, seismic signals, and infrasonic signals.

26. A method for detecting an object according to any of claims 23-25 **characterized in that** the method further comprises;

   f. sending the direction result to a central unit.

27. A method according to any of claims 23-26 **characterized in that** when a plurality of objects are detected simultaneously the determining step further comprises separating detected objects with respect to the direction of the different detected objects.

28. A method for locating a detected object in a predetermined area using a plurality of systems of detection units able to determine direction of the detected object charaterized in that the method comprises; receiving directions of the detected object from said plurality of systems of detection units; determining the location of said detected object by computing the location from the directions, wherein the computing is based on at least two directions received from said plurality of systems of detection units.

29. A method for locating a detected object according to claim 28, wherein the plurality of systems of detection units is synchronized.

FIG 1

FIG 2

FIG 3

FIG 4

FIG 5

FIG 6

FIG 7

FIG 8

**European Patent Office**

**EUROPEAN SEARCH REPORT**

Application Number

EP 06 11 1246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 103 49 479 B3 (SIEMENS AG) 14 July 2005 (2005-07-14) | 1,4,11, 14,23, 24,26-29 | INV. G01V1/00 |
| Y | * the whole document * | 2,3,5-8, 12, 15-19,22 | |
| Y | DE 195 42 871 C1 (STN ATLAS ELEKTRONIK GMBH, 28309 BREMEN, DE) 28 November 1996 (1996-11-28) * column 1, line 28 - line 57 * | 2,3,5-8, 12, 15-19,22 | |
| Y | US 2005/001755 A1 (STEADMAN ROBERT L ET AL) 6 January 2005 (2005-01-06) * paragraphs [0022], [0027]; figures 1,3 * | 2,3,5-8 | |
| X | US 4 811 308 A (MICHEL ET AL) 7 March 1989 (1989-03-07) * column 3, line 21 - column 5, line 36; figure 1 * | 1,9,10, 13,14, 20,21, 23,25,28 | TECHNICAL FIELDS SEARCHED (IPC) G01V |
| A | EP 1 321 915 A (JET RESEARCH SRL) 25 June 2003 (2003-06-25) * the whole document * | 1-29 | |

The present search report has been drawn up for all claims

| Place of search | Date of completion of the search | Examiner |
|---|---|---|
| Munich | 18 July 2006 | Thomas, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 11 1246

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2006

| Patent document cited in search report | | Publication date | Patent family member(s) | | Publication date |
|---|---|---|---|---|---|
| DE 10349479 | B3 | 14-07-2005 | NONE | | |
| DE 19542871 | C1 | 28-11-1996 | WO | 9719368 A1 | 29-05-1997 |
| | | | EP | 0861447 A1 | 02-09-1998 |
| US 2005001755 | A1 | 06-01-2005 | AU | 2004309783 A1 | 14-07-2005 |
| | | | CA | 2531086 A1 | 14-07-2005 |
| | | | EP | 1644686 A2 | 12-04-2006 |
| | | | WO | 2005064265 A2 | 14-07-2005 |
| US 4811308 | A | 07-03-1989 | NONE | | |
| EP 1321915 | A | 25-06-2003 | IT | UD20010205 A1 | 12-06-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19542871 C1
- US 5054006 A
- US 3573817 A
- US 5969608 A
- US 4604738 A